(19) **Europäisches Patentamt**

**European Patent Office**

**Office européen des brevets**

(11) **EP 0 943 468 B1**

(12) **EUROPÄISCHE PATENTSCHRIFT**

(45) Veröffentlichungstag und Bekanntmachung des Hinweises auf die Patenterteilung:
**16.04.2003   Patentblatt 2003/16**

(51) Int Cl.⁷: **B60G 17/015**, F04B 49/02

(21) Anmeldenummer: **99103746.6**

(22) Anmeldetag: **26.02.1999**

(54) **Luftfederungsanlage für Fahrzeuge**

Air spring installation for vehicles

Installation de ressort pneumatique pour véhicules

(84) Benannte Vertragsstaaten:
**DE FR GB IT SE**

(30) Priorität: **20.03.1998   DE 19812234**

(43) Veröffentlichungstag der Anmeldung:
**22.09.1999   Patentblatt 1999/38**

(73) Patentinhaber: **DaimlerChrysler AG**
**70567 Stuttgart (DE)**

(72) Erfinder:
• **Kutscher, Eberhard**
**72135 Dettenhausen (DE)**

• **Lang, Joachim**
**71120 Grafenau (DE)**
• **Lohrmann, Gerhard**
**71679 Asperg (DE)**
• **Schneider, Reiner**
**78655 Dunningen (DE)**
• **Walter, Udo**
**73312 Geislingen (DE)**

(56) Entgegenhaltungen:
**DE-A- 4 333 591**

## Beschreibung

Die Erfindung betrifft eine Luftfederungsanlage für Fahrzeuge, insbesondere Kraftfahrzeuge, mit den Merkmalen des Oberbegriffes des Anspruches 1. Eine derartige Luftfederungsanlage ist beispielsweise aus der DE 196 21 946 C1 bekannt.

Luftfederungsanlagen für Kraftfahrzeuge, wie z.B. Lastkraftwagen und deren Anhänger sowie Omnibusse, sind grundsätzlich bekannt und werden serienmäßig eingesetzt. Sie dienen der Federung des Fahrzeuges und werden außerdem zur Niveauregulierung des Fahrzeuges verwendet. Bei manchen Ausfuhrungsformen von derartigen Luftfederungsanlagen ist druckseitig des Kompressors ein pneumatischer Druckspeicher vorgesehen, der vom Kompressor ständig auf einem Ladedruck gehalten wird, der deutlich oberhalb der Betriebsdrücke der Luftfederelemente bzw. Luftfederbälge liegt. Bei einer solchen Luftfederungsanlage arbeitet der Kompressor in der Regel nur dann, wenn der Druckspeicher nachgeladen werden muß, wobei die Leistung des Kompressors unterhalb einer bei einer Bedarfsspitze der Luftfederungsanlage liegenden Spitzenleistung liegen kann, weil durch den Druckspeicher immer ein hinreichender Druckvorrat sichergestellt wird.

Bei der Verwendung von elektrisch angetriebenen Kompressoren besteht die Problematik, daß sich der Kompressor während des Betriebes stark erwärmt und bei einem länger anhaltenden Betrieb zu einer Überlastung und Beschädigung des Kompressors und somit zu einem Ausfall der Luftfederungsanlage führen kann. Um eine derartige Überlastung des Kompressors zu verhindern, wird für jeden Kompressortyp eine vorbestimmte maximale Einschaltdauer vorgegeben, deren Einhaltung von einem elektronischen Steuergerät der Luftfederungsanlage überwacht wird.

Beim Kompressorbetrieb wird dabei eine relative Einschaltdauer von einer absoluten Einschaltdauer unterschieden. Die relative Einschaltdauer gibt den Anteil einer Einschaltzeit an einer Betriebsperiode an, wobei sich diese Betriebsperiode aus der Einschaltzeit und einer Ausschaltzeit zusammensetzt, die zwischen zwei aufeinanderfolgenden Einschaltzeiten eingehalten werden muß. Beispielsweise bedeutet eine relative Einschaltdauer $ED_{rel}$ von 20 %, daß auf eine Einschaltzeit von z.B. 10 Sekunden erst eine Ausschaltzeit von 40 Sekunden folgen muß, bevor der Kompressor erneut eingeschaltet werden darf. Im vorgenannten Beispiel ergibt sich die Betriebsperiode als Summe der Einschaltzeit (10 Sekunden) und Ausschaltzeit (40 Sekunden) zu 50 Sekunden.

Im Unterschied dazu bestimmt die absolute Einschaltdauer die maximale Einschaltzeit, die der Kompressor ohne Unterbrechung (Ausschaltzeit) maximal in Betrieb sein darf.

Aus der DE 43 33 591 A1 ist ein Steuergerät zum bedarfsgerechten Ein- und Ausschalten eines elektrisch argetriebenen Luftkompressors bekannt, das die thermische Belastung des Luftkompressors entsprechend einer Belastungskennlinie durch das Verhältnis zur Einschaltzeit zur Summe von Einschaltzeit und Ausschaltzeit bestimmt. Beim bekannten Steuergerät werden zur Bestimmung der für die thermische Belastung relevanten Gesamteinschaltzeit Differenzwerte summiert, die aus den Einzel-Einschaltzeiten abzüglich der den jeweils nachfolgenden Ausschaltzeiten gemäß der Belastungskennlinie entsprechenden Einschaltzeitäquivalente gebildet sind. Wenn dann die relevante Gesamteinschaltzeit einen vorgegebenen Grenzwert überschreitet, bewirkt das Steuergerät für eine vorgebbare Zeit ein Abschalten des Kompressors, un diesen vor Überlastung und ggf. Zerstörung zu schützen.

Die Geschwindigkeit, mit der sich der Kompressor während seines Betriebes erhitzt, hängt von verschiedenen Randbedingungen ab, wie z.B. Einbaulage des Kompressors am Fahrzeug, Lufttemperatur, Geschwindigkeit einer den Kompressor beaufschlagenden Luftströmung. Die aus diesen Randbedingungen resultierenden Betriebsbedingungen für den Kompressor können dabei die Erwärmung des Kompressors verzögern oder beschleunigen.

Die im Steuergerät bekannter Luftfederungsanlagen voreingestellten Werte für die relative Einschaltdauer und die absolute Einschaltdauer sind dabei auf ungünstige Betriebsbedingungen für den Kompressor ausgelegt, um zu kurze Ausschaltzeiten und somit eine Überhitzung des Kompressor-Aggregates während ungünstiger Betriebsbedingungen zu vermeiden. Bei dieser Auslegung mit relativ langen Ausschaltzeiten kann jedoch die Leistungsfähigkeit des Kompressors während der Mehrzahl aller Betriebszustände, d.h. wenn normale oder sogar günstige Betriebsbedingungen herrschen, nicht oder nur geringfügig ausgenutzt wird, wodurch folglich auch die Leistungsfähigkeit der Luftfederungsanlage nicht voll ausgenutzt werden kann.

Die vorliegende Erfidung beschäftigt sich mit dem Problem, die Leistungsfähigkeit einer Luftfederungsanlage der eingangs genannten Art mit Hilfe einfacher technischer Maßnahmen zu verbessern.

Dieses Problem wird erfindungsgemäß durch eine Luftfederungsanlage mit den Merkmalen des Anspruchs 1 gelöst.

Die Erfindung beruht auf dem allgemeinen Gedanken, die Einschaltdauer (relativ bzw. absolut) des Kompressors variabel zu gestalten, wobei die jeweils aktuelle Einschaltdauer an die aktuell für den Kompressor herrschenden Betriebsbedingungen angepßt ist. Als Parameter, in dessen Abhängigkeit die Einschaltdauer des Kompressors variiert wird, dienen hierbei die Wärmeübertragungsbedingungen, die zwischen dem Kompressor und der diesen umgebenden Luft herrschen.

Bei der erfindungsgemäßen Luftfederungsanlage kann das Steuergerät die Einschaltdauer des Kompressors in Abhängigkeit der in Kompressorumgebung herrschenden Lufttemperatur und Luftströmungsgeschwindigkeit variieren. Die Erfindung nutzt dabei die Erkenntnis, daß die zwischen dem Kompressor und der diesen umgebenden Luft herrschenden Wärmeübertragungsbedingungen in hohem Maße von der Lufttemperatur un der Luftströmungsgeschwindigkeit abhängen können, die in Kompressorumgebung herrschen. Vorzugsweise soll sich die Einschaltdauer zum einen verkürzen, wenn die Lufttemperatur zunimmt und/oder die Luftströmungsgeschwindigkeit abnimmt, und sich andererseits verlängern, wenn die Lufttemperatur abnimmt und/oder die Luftströmungsgeschwindkeit zunimmt.

Bei einer bevorzugten Ausführungsform der erfindungsgemäßen Luftfederunganlage kann das Steuergerät die in Kompressorumgebung herrschende Lufttemperatur anhand der aktuellen Fahrzeugaußenlufttemperatur und/ oder der aktuellen Fahrzeugmotoransauglufttemperatur bestimmen. Diese Temperaturen werden vorzugsweise durch eine geeignete Sensorik detektiert, wobei damit korrelierende Signalwerte generiert werden, die das Steuergerät zur Bestimmung der Lufttemperatur in Kompressornähe verarbeitet. Demnach wird die Lufttemperatur in Kompressorumgebung nicht direkt in dieser Kompressorumgebung gemessen, sondern indirekt mit Hilfe einer entsprechenden Modellbetrachtung anhand der Fahrzeugaußenlufttemperatur bzw. der Fahrzeugmotoransauglufttemperatur ermittelt. Auf diese Weise kann insbesondere auf eine bereits am Fahrzeug vorhandene Sensorik zurückgegriffen werden, mit der die genannten Temperaturen ohnehin bestimmt werden. Vorzugsweise arbeitet das Steuergerät mit einer bereits am Fahrzeug vorhandenen elektronischen Motorsteuerung zusammen oder ist in diese integriert, so daß beispielsweise die entsprechenden Signalleitungen der Sensorik gleichfalls mitbenutzt werden können und lediglich die bereits in der Motorsteuerung vorliegenden Werte für die vorgenannten Temperaturen entsprechend verarbeitet werden.

Bei einer vorteilhaften Ausführungsform nach der Erfindung kann das Steuergerät die in Kompressorumgebung herrschende Luftströmungsgeschwindigkeit anhand der aktuellen Fahrzeuggeschwindigkeit bestimmen, wobei vorzugsweise wiederum auf eine bereits am Fahrzeug vorhandene Sensorik und Motorsteuerung zurückgegriffen werden kann.

Weitere wichtige Merkmale und Vorteile der erfindungsgemäßen Luftfederungsanlage ergeben sich aus den Unteransprüchen, aus der Zeichnung und aus der nachfolgenden Beschreibung eines bevorzugten Ausführungsbeispieles anhand der Zeichnung.

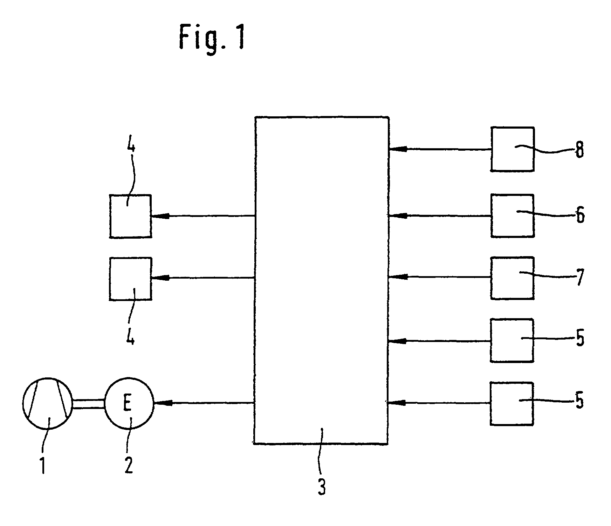

Figur 1 zeigt eine Teildarstellung einer Luftfederungsanlage in Form eines Blockschaltbildes.

Eine nicht näher dargestellte Luftfederungsanlage besitzt einen Kompressor 1, der durch einen Elektromotor 2 angetrieben wird. Dieser Motor 2 wird automatisch, parameterabhängig durch ein vorzugsweise rechnergestütztes Steuergerät 3 ein- bzw. ausgeschaltet, das auch die Stellorgane von nicht näher dargestellten Ventilen 4 der Luftfederungsanlage betätigt.

Eingangsseitig ist die Steuerschaltung 3 mit Gebern 5 verbunden, die beispielsweise die Vertikalabstände zwischen einem Fahrzeugaufbau und Fahrzeugrädern und damit das Aufbauniveau erfassen, so daß das Steuergerät durch einen entsprechenden Soll-Istwert-Vergleich ein gewünschtes Niveau einzustellen bzw. einzuhalten vermag, indem der Elektromotor 2 und damit der Kompressor 1 bedarfsgerecht ein- bzw. ausgeschaltet und die Ventile 4 in entsprechender Weise betätigt werden.

Außerdem ist das Steuergerät 3 eingangsseitig an einen ersten Temperatursensor 6 angeschlossen, mit dem die Fahrzeugaußenlufttemperatur $T_{AT}$ detektiert und ein entsprechendes Signal $S_{AT}$ generiert und dem Steuergerät 3 zugeleitet wird. Außerdem ist an das Steuergerät 3 eingangsseitig ein zweiter Temperatursensor 7 angeschlossen, der die Fahrzeugmotoransauglufttemperatur $T_{FT}$ detektiert und einen damit korrelierenden Signalwert $S_{FT}$ generiert und diesen dem Steuergerät 3 zur Verfügung stellt. Des weiteren ist eingangsseitig an das Steuergerät 3 ein Signalgeber 8 angeschlossen, der einen mit der Fahrzeuggeschwindigkeit $G_{FG}$ korrelierenden Signalwert $S_{FG}$ generiert und an das Steuergerät 3 weitergibt.

Anhand bestimmter Denkmodelle besteht nun die Möglichkeit, daß das Steuergerät 3 aus den ihm zur Verfügung gestellten Signalwerten $S_{AT}$ und $S_{FT}$, die mit der Fahrzeugaußentemperatur $T_{AT}$ bzw. mit der Fahrzeugmotoransauglufttemperatur $T_{FT}$ korrelieren, einen Signalwert $S_{LT}$ zu berechnen, der mit der Lufttemperatur $T_{LT}$ in Kompressornähe korreliert. Ebenso kann mit entsprechenden Denkmodellen aus dem mit der Fahrzeuggeschwindigkeit $G_{FG}$ korrelierenden Signalwert $F_{FG}$ ein Signalwert $S_{LG}$ errechnet werden, der mit der Luftströmungsgeschwindigkeit $G_{LG}$ in Kompressorumgebung korreliert. Derartigen Denkmodellen können beispielsweise lineare Zusammenhänge zugrundeliegen. Der Einfluß der (Fahrzeug)Außenlufttemperatur $T_{AT}$ auf die Lufttemperatur $T_{LT}$ in Kompressornähe kann beispielsweise etwa wie folgt dargestellt werden:

$$EF_{AT} = K_{AT} - T_{AT} \cdot S_{AT},$$

wobei:

$EF_{AT} =$    Einflußfaktor der Außenlufttemperatur,
$K_{AT} =$    Konstante der Geradengleichung für den Einfluß der Außenlufttemperatur,
$T_{AT} =$    Außenlufttemperatur und

$S_{AT}$ = Steigung der Geradengleichung für den Einfluß der Außenlufttemperatur.

Bei einem bestimmten Fahrzeugtyp und einem bestimmten Kompressortyp hat sich ein Wert für die Konstante $K_{AT}$ = 1,5 und für Steigung $S_{AT}$ = 0,025 bewährt.

Für den Einfluß der Fahrzeugmotoransauglufttemperatur $T_{FT}$ auf die Lufttemperatur $T_{LT}$ in Kompressorumgebung gilt beispielsweise etwa folgender Zusammenhang:

$$EF_{FT} = K_{FT} - T_{FT} \cdot S_{FT},$$

wobei:

$EF_{FT}$ = Einflußfaktor der Fahrzeugmotoansauglufttemperatur,
$K_{FT}$ = Konstante der Geradengleichung für den Einfluß der Fahrzeugmotoransauglufttemperatur,
$T_{FT}$ = Fahrzeugmotoransauglufttemperatur und
$S_{FT}$ = Steigung der Geradengleichung für den Einfluß der Fahrzeugmotoransauglufttemperatur.

Für vorgenannten Fahrzeug-Typ und Kompressor-Typ haben sich für die Konstante und die Steigung der Gleichung für den Einfluß der Fahrzeugmotoransaugtemperatur folgende Werte bewährt: $K_{FT}$ = 1,75 und $S_{FT}$ = 0,0125.

Schließlich wird zur Berücksichtigung des Einflusses der Fahrzeuggeschwindigkeit $G_{FG}$ auf die Luftstromungsgeschwindigkeit $G_{LG}$ etwa folgende Gleichung zugrundegelegt:

$$EF_{FG} = K_{FG} + G_{FG} \cdot S_{FG},$$

wobei:

$EF_{FG}$ = Einflußfaktor der Fahrgeschwindigkeit,
$K_{FG}$ = Konstante der Geradengleichung für den Einfluß der Fahrzeuggeschwindigkeit,
$G_{FG}$ = Fahrzeuggeschwindigkeit und
$S_{FG}$ = Steigung der Geradengleichung für den Einfluß der Fahrzeuggeschwindigkeit.

Die für vorgenannten Kompressor-Typ und Fahrzeug-Typ bevorzugten Werte für die Geradensteigung und die Geradenkonstante lauten wie folgt: $K_{FG}$ = 0,5 und $S_{FG}$ = 0,01.

Die relative bzw. absolute Einschaltdauer ED wird vom Steuergerät 3 nun in Analogie zu folgender Gleichung ermittelt:

$$ED = ED_{Basis} \cdot \frac{a_{AT} \cdot EF_{AT} + a_{FT} \cdot EF_{FT} + a_{FG} \cdot EF_{FG}}{a_{AT} + a_{FT} + a_{FG}},$$

wobei:

$ED$ = berechnete Einschaltdauer,
$ED_{Basis}$ = Basis-Einschaltdauer bei vorbestimmten Betriebsparametern des Fahrzeuges,
$EF_{AT}$ = Einflußfaktor der Außenlufttemperatur $T_{AT}$,
$EF_{FT}$ = Einflußfaktor der Fahrzeugmotoransauglufttemperatur $T_{FT}$,
$EF_{FG}$ = Einflußfaktor der Fahrzeuggeschwindigkeit $G_{FA}$,
$a_{AT}$ = Gewichtungsfaktor für den Einfluß der Außenlufttemperatur $T_{AT}$,
$a_{FT}$ = Gewichtungsfaktor für den Einfluß der Fahrzeugmotoransauglufttemperatur $T_{FT}$ und
$a_{FG}$ = Gewichtungsfaktor für den Einfluß der Fahrzeuggeschwindigkeit $G_{FG}$.

Als Referenz- oder Ausgangsbetriebsparameter des Fahrzeuges bzw. als Umgebungsbedingungen des Kompressorbetriebes, bei denen die Basis-Einschaltdauer $ED_{Basis}$ festgelegt wird, kommen beispielsweise folgende Werte in Frage: $G_{FG}$ = 50 km/h bei $T_{AT}$ = 20°C und $T_{FT}$ = 60°C.

Ein wesentlicher Vorteil der erfindungsgemäßen Luftfederungsanlage ist darin zu sehen, daß die Anpassung der Einschaltdauer (relativ bzw. absolut) des Kompressors 1 an die jeweils in Kompressorumgebung herrschenden Betriebsbedingungen, das sind - wie gezeigt - vorzugsweise die Lufttemperatur und die Luftströmungsgeschwindigkeit in Kompressornähe, anhand der Daten bzw. Signalwerte einer ohnehin am Fahrzeug bereits vorhandenen Sensorik verwendet werden können. Außerdem kann das für die Verarbeitung dieser Signalwerte und zur Ausgabe der entsprechenden Einschaltdauer ED verwendete Steuergerät 3 in eine bereits am Fahrzeug vorhandene elektronische, rechnergestützte Motorsteuerung integriert werden. Somit läßt sich die erfindungsgemäß ausgestaltete Luftfederunganlage preiswert und ohne Montageaufwand in Fahrzeugen implementieren, die bereits mit einer herkömmlichen Luftfederungsanlage ausgestattet sind. Die erfindungsgemäße Luftfederungsanlage kann somit in besonders einfacher Weise nachgerüstet werden.

**Patentansprüche**

1. Luftfederungsanlage für Fahrzeuge, insbesondere Kraftfahrzeuge, mit einem von einem Steuergerät (3) bedarfsabhängig ein- und ausschaltbaren Kompressor (1), der bei Normalbetrieb der Luftfederungsanlage nur intermittierend, mit vorbestimmter Einschaltdauer zu arbeiten braucht,
**dadurch gekennzeichnet,**
**dass** das Steuergerät (3) die Einschaltdauer (ED) des Kompressors (1) in Abhängigkeit von Parametern variiert, von denen die zwischen dem Kompressor (1) und der diesen umgebenden Luft herrschenden Wärmeübertragungsbedingungen abhängen, und dass als Parameter, von denen die Wärmeübertragungsbedingungen abhängen, die Lufttemperatur ($T_{LT}$) und die Luftströmungsgeschwindigkeit ($G_{LG}$) dienen, die in Kompressorumgebung herrschen,
wobei das Steuergerät (3) mit einer Sensorik (6, 7,8) verbunden ist und mit deren Hilfe die Lufttemperatur ($T_{LT}$) und die Luftströmungsgeschwindigkeit ($G_{LG}$) ermittel bar ist.

2. Luftfederungsanlage nach Anspruch 1,
**dadurch gekennzeichnet,**
**dass** die Abhängigkeit der Einschaltdauer (ED) des Kompressors (1) von der in Kompressorumgebung herrschenden Lufttemperatur ($T_{LT}$) und Luftströmungsgeschwindigkeit ($G_{LG}$) derart gewählt ist, dass sich die Einschaltdauer (ED) verkürzt, wenn die Lufttemperatur ($T_{LT}$) zunimmt und/oder die Luftströmungsgeschwindigkeit ($G_{LG}$) abnimmt, und sich verlängert, wenn die Lufttemperatur ($T_{LT}$) abnimmt und/oder die Luftströmungsgeschwindigkeit ($G_{LG}$) zunimmt.

3. Luftfederungsanlage nach einem der Ansprüche 1 oder 2,
**dadurch gekennzeichnet,**
**dass** das Steuergerät (3) die in Kompressorumgebung herrschende Lufttemperatur ($T_{LT}$) anhand der aktuellen Fahrzeugaußenlufttemperatur ($T_{AT}$) und/oder der aktuellen Fahrzeugmotoransauglufttemperatur ($T_{FT}$) bestimmt.

4. Luftfederungsanlage nach einem der Ansprüche 1 bis 3,
**dadurch gekennzeichnet,**
**dass** das Steuergerät (3) die in Kompressorumgebung herrschende Luftströmungsgeschwindigkeit ($G_{LG}$) anhand der aktuellen Fahrzeuggeschwindigkeit ($G_{FG}$) bestimmt.

5. Luftfederungsanlage nach einem der Ansprüche 1 bis 4,
**dadurch gekennzeichnet,**
**dass** die Einschaltdauer (ED) einem in Analogie zu der Gleichung:

$$ED = ED_{Basis} \cdot \frac{a_{AT} \cdot EF_{AT} + a_{FT} \cdot EF_{FT} + a_{FG} \cdot EF_{FG}}{a_{AT} + a_{FT} + a_{FG}}$$

berechneten Wert entspricht, wobei:

ED = berechnete Einschaltdauer,
$ED_{Basis}$ = Basis-Einschaltdauer bei vorbestimmten Betriebsparametern des Fahrzeuges,
$EF_{AT}$ = Einflußfaktor der Außenlufttemperatur ($T_{AT}$),
$EF_{FT}$ = Einflußfaktor der Fahrzeugmotoransauglufttemperatur ($T_{FT}$),
$EF_{FG}$ = Einflußfaktor der Fahrzeuggeschwindigkeit ($G_{FG}$),
$a_{AT}$ = Gewichtungsfaktor für den Einfluß der Außenlufttemperatur ($T_{AT}$),
$a_{FT}$ = Gewichtungsfaktor für den Einfluß der Fahrzeugmotoransauglufttemperatur ($T_{FT}$) und

$a_{FG} =$ Gewichtungsfaktor für den Einfluß der Fahrzeuggeschwindigkeit ($G_{FG}$).

**6.** Luftfederungsanlage nach Anspruch 5,
**dadurch gekennzeichnet,**
**dass** der Einflußfaktor für die Außenlufttemperatur ($EF_{AT}$), der Einflußfaktor für die Fahrzeugmotoransauglufttemperatur ($EF_{FT}$) und der Einflußfaktor für die Fahrzeuggeschwindigkeit ($EF_{FG}$) in Analogie zu den Gleichungen:

$$EF_{AT} = K_{AT} - T_{AT} \cdot S_{AT},$$

$$EF_{FT} = K_{FT} - T_{FT} \cdot S_{FT},$$

$$EF_{FG} = K_{FG} + G_{FG} \cdot S_{FG}$$

berechneten Werten entsprechen, wobei

$T_{AT} =$ aktuelle (Fahrzeug)Außentemperatur,
$T_{FT} =$ aktuelle Fahrzeugmotoransauglufttemperatur,
$G_{FG} =$ aktuelle Fahrzeuggeschwindigkeit,
$K =$ Konstante der jeweiligen Gleichung und
$S =$ Steigung der jeweiligen Gleichung.

**7.** Luftfederungsanlage nach Anspruch 6,
**dadurch gekennzeichnet,**
**dass** die Konstanten (K) und die Steigungen (S) der Gleichungen folgende Werte aufweisen:

| | |
|---|---|
| $K_{AT} = 1,5$ | $S_{AT} = 0,025$ |
| $K_{FT} = 1,75$ | $S_{FT} = 0,0125$ |
| $K_{FG} = 0,5$ | $S_{FG} = 0,01$ |

**8.** Luftfederungsanlage nach einem
der vorhergehenden Ansprüche,
**dadurch gekennzeichnet,**
**dass** die Einschaltdauer (ED) als absolute Einschaltdauer dient, welche die maximale Einschaltzeit angibt, die der Kompressor (1) ohne Betriebsunterbrechung eingeschaltet sein darf.

**9.** Luftfederungsanlage nach einem
der vorhergehenden Ansprüche,
**dadurch gekennzeichnet,**
**dass** die Einschaltdauer (ED) als relative Einschaltdauer dient, welche den Anteil der Einschaltzeit an einer Betriebsperiode angibt, die sich aus Einschaltzeit und aus einer zwischen zwei aufeinanderfolgenden Einschaltzeiten vorhandenen Ausschaltzeit zusammensetzt.

**10.** Luftfederungsanlage nach einem
der vorhergehenden Ansprüche,
**dadurch gekennzeichnet,**
**dass** das Steuergerät (3) der Luftfederungsanlage in eine elektronische Motorsteuerung für den Fahrzeugmotor integriert ist und/oder dass die Sensorik (6,7,8) der Luftfederungsanlage in eine Sensorik des Fahrzeuges integriert ist.

**Claims**

**1.** Air suspension system for motor vehicles, in particular heavy goods vehicles, with a compressor (1) which can be switched on and off by a control device (3) depending on requirements and which needs to operate on an intermittent basis only with a predetermined cut-in time during normal operation of the air suspension system,
**characterised in that**
the control device (3) varies the cut-in time (ED) of the compressor (1) on the basis of parameters, which depend on prevailing heat exchange conditions between the compressor (1) and the air surrounding it, and the air temperature ($T_{LT}$) and the air flow velocity ($G_{LG}$) prevailing in the compressor environment are used as parameters on which the heat exchange conditions are dependent,
the control device (3) being connected to a sensor system (6, 7, 8), with the aid of which the air temperature ($T_{LT}$) and the air flow velocity ($G_{LG}$) can be detected.

2. Air suspension system as claimed in claim 1,
**characterised in that**
the dependence of the cut-in time (ED) on the air temperature ($T_{LT}$) and air flow velocity ($G_{LG}$) prevailing in the compressor vicinity is selected so that the cut-in time (ED) is shortened if the air temperature ($T_{LT}$) increases and/or the air flow velocity ($G_{LG}$) decreases and lengthened if the air temperature ($T_{LT}$) decreases and/or the air flow velocity ($G_{LG}$) increases.

3. Air suspension system as claimed in one of claims 1 or 2,
**characterised in that**
the control device (3) determines the air temperature ($T_{LT}$) prevailing in the compressor vicinity on the basis of the instantaneous vehicle external air temperature ($T_{AT}$) and/or the instantaneous vehicle engine intake air temperature ($T_{FT}$).

4. Air suspension system as claimed in one of claims 1 to 3,
**characterised in that**
the control device (3) determines the air flow velocity ($G_{LG}$) prevailing the compressor vicinity on the basis of the instantaneous vehicle speed ($G_{FG}$).

5. Air suspension system as claimed in one of claims 1 to 4,
**characterised in that**
the cut-in time (ED) corresponds to a value computed as an analogy of the equation:

$$ED = ED_{Basis} \cdot \frac{a_{AT} \cdot EF_{AT} + a_{FT} \cdot EF_{FT} + a_{FG} \cdot EF_{FG}}{a_{AT} + a_{FT} + a_{FG}},$$

where:

$ED =$ computed cut-in time
$ED_{Basis} =$ basis cut-in time at predetermined operating parameters of the vehicle,
$EF_{AT} =$ factor influencing the external air temperature $T_{AT}$,
$EF_{FT} =$ factor influencing the vehicle engine intake air temperature $T_{FT}$,
$EF_{FG} =$ factor influencing the vehicle speed $G_{FG}$,
$a_{AT} =$ weighting factor for the influence of the external air temperature $T_{AT}$,
$a_{FT} =$ weighting factor for the influence of the vehicle engine intake air temperature $T_{FT}$ and
$a_{FG} =$ weighting factor for the influence of the vehicle speed $G_{FG}$.

6. Air suspension system as claimed in claim 5,
**characterised in that**
the factor influencing the external air temperature ($EF_{AT}$), the factor influencing the vehicle engine intake air temperature ($EF_{FT}$) and the factor influencing the vehicle speed ($EF_{FG}$) correspond to values computed as an analogy with the equations:

$$EF_{AT} = K_{AT} - T_{AT} \cdot S_{AT},$$

$$EF_{FT} = K_{FT} - T_{FT} \cdot S_{FT}$$

$$EF_{FG} = K_{FG} + G_{FG} \cdot S_{FG},$$

where:

$T_{AT}$ =     current (vehicle) external temperature,
$T_{FT}$ =     current vehicle engine intake air temperature,
$G_{FG}$ =     current vehicle speed,
$K$ =     constant of the respective equation and
$S$ =     rising gradient of the respective equation.

7. Air suspension system as claimed in claim 6,
   **characterised in that**
   the constants (K) and the rising gradients (S) of the equations have the following values:

| | |
|---|---|
| $K_{AT} = 1.5$ | $S_{AT} = 0.025$ |
| $K_{FT} = 1.75$ | $S_{FT} = 0.0125$ |
| $K_{FG} = 0.5$ | $S_{FG} = 0.01.$ |

8. Air suspension system as claimed in one of the preceding claims,
   **characterised in that**
   the cut-in time (ED) serves as an absolute cut-in time representing the maximum cut-in time for which the compressor (1) may be switched on without interrupted operation.

9. Air suspension system as claimed in one of the preceding claims,
   **characterised in that**
   the cut-in time (ED) serves as a relative cut-in time representing the proportion of the cut-in time during an operating period made up of cut-in time and an available cut-out time between two consecutive cut-in times.

10. Air suspension system as claimed in one of the preceding claims,
    **characterised in that**
    the control device (3) of the air suspension system is integrated in an electronic engine control system for the vehicle engine and/or the sensor system (6, 7, 8) of the air suspension system is integrated in a sensor system of the vehicle.

**Revendications**

1. Installation de suspension pneumatique pour véhicules, en particulier pour véhicules automobiles, comportant un compresseur (1) qui est susceptible d'être mis en marche et arrêté en fonction des besoins par un appareil de commande (3) et qui doit travailler seulement de façon intermittente avec une durée de marche prédéterminée en fonctionnement normal de l'installation de suspension pneumatique, **caractérisée en ce que** l'appareil de commande (3) fait varier la durée de marche (ED) du compresseur (1) en fonction de paramètres dont dépendent les conditions de transfert thermique régnant entre le compresseur (1) et l'air qui l'entoure, et **en ce qu'**à titre de paramètres dont dépendent les conditions de transfert thermique servent la température d'air ($T_{LT}$) et la vitesse d'écoulement d'air ($G_{LG}$) qui règnent au voisinage du compresseur, et **en ce que** l'appareil de commande (3) est connecté à une unité sensorielle (6, 7, 8) à l'aida de laquelle peut être déterminée la température d'air ($T_{LT}$) et la vitesse d'écoulement d'air ($G_{LG}$).

2. Installation de suspension pneumatique selon la revendication 1, **caractérisée en ce que** la dépendance de la durée de marche (ED) du compresseur (1) par rapport à la température d'air ($T_{LT}$) et à la vitesse d'écoulement d'air ($G_{LG}$) régnant au voisinage du compresseur est choisie telle que la durée de marche (ED) se raccourcit lorsque la température d'air ($T_{LT}$) augmente et/ou que la vitesse d'écoulement d'air ($G_{LG}$) diminue, et qu'elle se prolonge lorsque la température d'air ($T_{LT}$) diminue et/ou que la vitesse d'écoulement d'air ($G_{LG}$) augmente.

3. Installation de suspension pneumatique selon l'une ou l'autre des revendications 1 et 2, **caractérisée en ce que** l'appareil de commande (3) détermine la température d'air ($T_{LT}$) régnant au voisinage du compresseur en se basant sur la température actuelle ($T_{AT}$) de l'air extérieur au véhicule et/ou sur la température actuelle ($T_{FT}$) de l'air aspiré par le moteur du véhicule.

4. Installation de suspension pneumatique selon l'une des revendications 1 à 3, **caractérisée en ce que** l'appareil de commande (3) détermine la vitesse d'écoulement d'air ($G_{LG}$) régnant au voisinage du compresseur en se basant sur la vitesse actuelle du véhicule ($G_{FG}$).

5. Installation de suspension pneumatique selon l'une des revendications 1 à 4, **caractérisée en ce que** la durée de marche (ED) correspond à une valeur calculée par analogie à l'équation :

$$ED = ED_{base} \cdot \frac{a_{AT} \cdot EF_{AT} + a_{FT} \cdot EF_{FT} + a_{FG} \cdot EF_{FG}}{a_{AT} + a_{FT} + a_{FG}}$$

dans laquelle
ED = durée de marche calculée
$ED_{base}$ = durée de marche de base pour des paramètres de fonctionnement prédéterminés du véhicule
$EF_{AT}$ = facteur d'influence de la température d'air extérieur ($T_{AT}$)
$EF_{FT}$ = facteur d'influence de la température de l'air aspiré par le moteur du véhicula ($T_{FT}$)
$EF_{FG}$ = facteur d'influence de la vitesse de véhicule ($G_{FG}$)
$a_{AT}$ = facteur de pondération pour l'influence de la température de l'air extérieur ($T_{AT}$)
$a_{FT}$ = facteur de pondération pour l'influence de la température de l'air aspiré par le moteur du véhicule ($T_{FT}$)
$a_{FG}$ = facteur de pondération pour l'influence de la vitesse de véhicule ($G_{FG}$).

6. Installation de suspension pneumatique selon la revendication 5, **caractérisée en ce que** le facteur d'influence pour la température de l'air extérieur ($EF_{AT}$), le facteur d'influence pour la température de l'air aspiré par le moteur du véhicule ($EF_{FT}$) et le facteur d'influence pour la vitesse de véhicule ($EF_{FG}$) correspondent par analogie aux équations

$$EF_{AT} = K_{AT} - T_{AT} \cdot S_{AT}$$

$$EF_{FT} = K_{FT} - T_{FT} \cdot S_{FT}$$

$$EF_{FG} = K_{FG} + G_{FG} \cdot S_{FG}$$

dans lesquelles
$T_{AT}$ = température extérieure actuelle (du véhicule)
$T_{FT}$ = température actuelle de l'air aspiré par le moteur du véhicule
$G_{FG}$ = vitesse actuelle du véhicule
K = constante de l'équation respective
S = pente de l'équation respective.

7. Installation de suspension pneumatique selon la revendication 6, **caractérisée en ce que** les constantes (K) et les pentes (S) des équations présentent les valeurs suivantes :

| | |
|---|---|
| $K_{AT}$=1,5 | $S_{AT}$=0,025 |
| $K_{FT}$=1,75 | $S_{FT}$=0,0125 |
| $K_{FG}$=0,5 | $S_{FG}$=0,01 |

8. Installation de suspension pneumatique selon l'une des revendications précédentes, **caractérisée en ce que** la durée de marche (ED) sert de durée de marche absolue qui indique le temps de marche maximal pendant lequel peut fonctionner le compresseur (1) sans interruption.

9. Installation de suspension pneumatique selon l'une des revendications précédentes, **caractérisée en ce que** la durée de marche (ED) sert de durée de marche relative qui indique la proportion du temps de marche dans une période de fonctionnement qui se compose du temps de marche et d'un temps d'arrêt prévu entre deux temps de marche successifs.

10. Installation de suspension pneumatique selon l'une des revendications précédentes, **caractérisée en ce que** l'appareil de commande (3) de l'installation de suspension pneumatique est intégré dans une commande de moteur électronique pour le moteur du véhicule et/ou **en ce que** l'unité sensorielle (6, 7, 8) de l'installation de suspension pneumatique est intégrée dans une unité sensorielle du véhicule.

Fig. 1